# EUROPEAN PATENT APPLICATION

(11) **EP 2 749 975 A1**
(43) Date of publication of application: **02.07.2014**
(21) Application number: 12460098.2
(22) Date of filing: 31.12.2012
(51) Int. Cl.: G05B 23/02

(54) **Method for collection, selection and conversion of measurement data enabling diagnosis of electricity devices, especially in industrial plants and a concentrator for applying this method**

(71) Applicant: Efekt Technologies Sp. z o .o., 28-236 Rytwiany (PL)
(72) Inventor: Wasik, Wojciech, 25-344 Kielce (PL); Czupryna, Marcin, 02-792 Warszawa (PL); Bien, Andrzej, 30-864 Kraków (PL); Dunin-Wasawicz, Stefan, 02-635 Warszawa (PL); Borkowski, Dariusz, 30-830 Kraków (PL); Wetula, Andrzej, 31-271 Kraków (PL); Kowalski, Jakub M., 34-500 Zakopane (PL)
(74) Representative: Kaminski, Zbigniew

(57) **Abstract**

A method for collection, selection and conversion of measurement data enabling diagnosis of electricity devices, especially in industrial plants, comprising transmission of measurement results from various meters, cooperating with different receiving devices of electricity, to corresponding inputs of a concentrator, pre-processing the results and converting collected data to one standard, and sending the data to a database using conventional transmission standards, which is characterized in that in the first cycle, comprising setting of an operating parameter range, the concentrator identifies a normal operating state of the respective devices included in the energy network, and next writes into a memory the obtained information about this operating state, while in the next cycle the concentrator compares this obtained information with parameters of the current operating state of the device and sends an alarm signal to an output of the concentrator only when it detects deviations of operating parameters in relation to the range of parameters set in the first cycle, thereby reducing the load of a transmission medium.

The present invention also relates to a concentrator for collection, selection and conversion of measurement data enabling diagnosis of electricity devices, especially in industrial plants, comprising a processor, an input module, a filter and an output buffer, which is characterized in that it further comprises a device state identification module (4) adapted for identifying an operating state of receiving devices included in the energy network and writing into its memory obtained information about this operating state.

## Description

The present invention relates to a method for collection, selection and conversion of measurement data enabling diagnosis of electricity devices, especially in industrial plants, comprising transmission of measurement results from various meters, cooperating with different receiving devices of electricity, to corresponding inputs of a concentrator, pre-processing the results and converting collected data to one standard, and sending the data to a database using conventional transmission standards.

The present invention also relates to a concentrator for applying the method, which is used for collection, selection and conversion of measurement data enabling diagnosis of electricity devices, especially in industrial plants.

Today's receivers of electricity in SMART GRID networks, especially in industrial plants, can be controlled and observed using a wide range of instruments and recorders. These observations are intended to optimize the energy management of receiving devices powering a plant as well as to watch the operation and diagnosis of these receiving devices.

U.S. patent application No. US 2009/0198384 discloses an energy network of SMART GRID type having the ability to respond to variables and to transfer data over a computer network.

U.S. patent application No. US 2011/0046792 relates to a home energy management system, including operation for variable load and control of receiving devices.

U.S. patent application No. US 2012/0112654 describes a system for controlling operation of electric light sources with use of radio communication technologies for transmitting data about receivers, such as the state of the light source, power consumption, brightness and whether the receivers have a failure.

U.S. Patent No. US 8234017 discloses a method for response to load variations, that is to power consumption, and for transmission of information about that power consumption.

In each of the above solutions diagnosis of electricity devices is considered, but it restricts only to finding the fact of failure that has already occurred.

The object of the present invention is to provide a method for collection, selection and conversion of measurement data enabling diagnosis of electricity devices, especially in industrial plants, and a concentrator for applying this method, which would allow remote diagnosis and control of larger number of electricity consumers with the use of a computer network with limited bandwidth, by obtaining, via the concentrator, information about improper operation of electrical devices before they fail and by sending through the network only information, which is important.

This object is solved with a method of the present invention according to the characteristic part of claim 1.

Preferably, in the method according to the invention the concentrator carries out operations in real-time, and each of the cycle is repeated within a determined time interval being specific for the cycle.

The object of the invention is also achieved by a concentrator for applying the method according to the characteristic part of claim 4.

The concentrator according to the invention is preferably provided with an identification module, which is connected directly to a filter of data relating to operation of receiving devices.

An advantage of the present invention is the diagnosis adapting to different types of receivers and capability of "learning" about data received from a receiver at normal operation. Another advantage is the ability to work with various measuring instruments and recorders, for example with already installed on an object.

The concentrator of the present invention also performs additional operations: individually watches diagnosis by analyzing received measurement data; notifies of alarm and additionally sends, upon request, a small data packet associated with this alarm.

Steps of the method according to the present invention become significant when a group of industrial receiving devices of electricity is subjected to a control. An operation of the concentrator for the group of devices and of more concentrators in a wide area, that is in a computer network, allows for precise management of supplied electricity, and an effective and secure flow of information about the operation of the receiving devices.

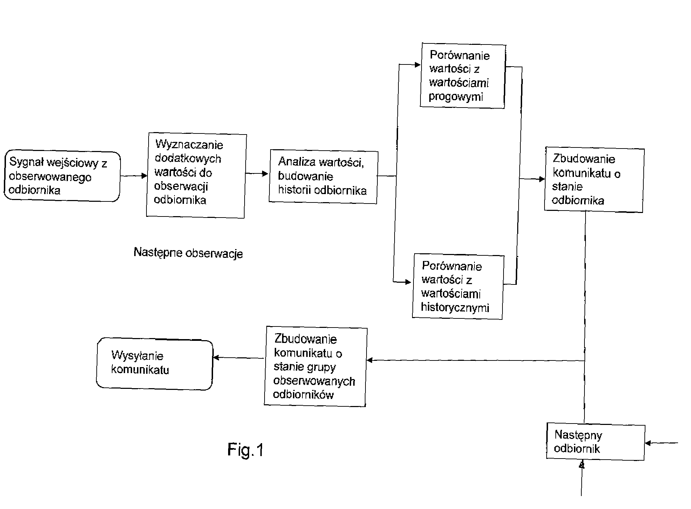

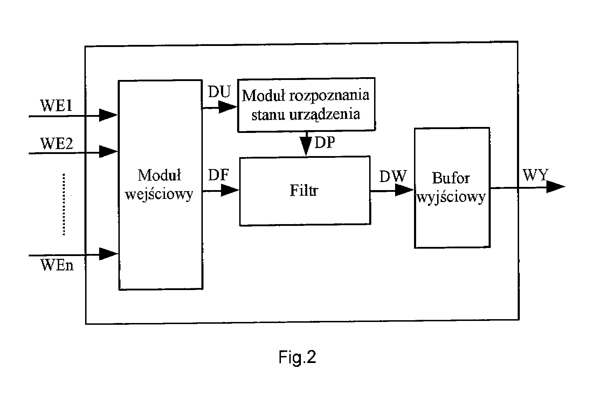

An exemplary embodiment of a method and concentrator according to the present invention is shown in the drawings, in which: Figure 1 is a flowchart of collection, selection and conversion of measurement data and its transmission to a network, and Figure 2 is a block diagram showing a construction of an exemplary concentrator.

A concentrator 1 shown in Figure 2 consists of an input module 2, a filter 3, a device state identification module 4 and an output buffer 5. One or more communication input interfaces WE1 - wen, are connected to the input module 2, which provide measurement results (measurement data) from meters of electricity parameters or from other measuring instruments. The input module 2 collects data from measuring instruments, determines values of additional parameters based on the collected data, and provides two data streams: learning data DU and filtered data DF (Figure 1). Learning data DU is delivered to the device state identification module 4, which recognizes the state of normal operation of a device and stores it in its memory, making them available later in the form of comparative data DP. The filtered data DF is supplied to the filter 3, which performs a comparison of the filtered data with a reference data. In case of match of the filtered data with the reference data within limits of tolerance, the filter does not transmit the data on. In case of discrepancy between the filtered data and the reference data, all or a selected subset of filtered data is made available at an output of the filter 3 as an output data DW, along with notification of an alarm condition. The output data is delivered to an input of the output buffer 5, the task of which is to adapt this data form to a transmission medium being in use.

Thus the output data is transmitted as small data packets. Moreover, diagnostic capability allows to extend the data packets with data relevant to the diagnosis, but only as anomalies are detected in operation of receiving devices of electricity.

## Claims

1. A method for collection, selection and conversion of measurement data enabling diagnosis of electricity devices, especially in industrial plants, comprising transmission of measurement results from various meters, cooperating with different receiving devices of electricity, to corresponding inputs of a concentrator, pre-processing the results and converting collected data to one standard, and sending the data to a database using conventional transmission standards, **characterized in that** in the first cycle, comprising setting of an operating parameter range, the concentrator identifies a normal operating state of the respective devices included in the energy network, and next writes into a memory the obtained information about this operating state, while in the next cycle the concentrator compares this obtained information with parameters of the current operating state of the device and sends an alarm signal to an output of the concentrator only when it detects deviations of operating parameters in relation to the range of parameters set in the first cycle, thereby reducing the load of a transmission medium.

2. The method according to claim 1, **characterized in that** the concentrator carries out the second cycle in real-time.

3. The method according to claim 1, **characterized in that** the concentrator repeats each of the cycles within a determined time interval being specific for the cycle.

4. A concentrator for collection, selection and conversion of measurement data enabling diagnosis of electricity devices, especially in industrial plants, comprising a processor, an input module, a filter and an output buffer, **characterized in that** it further comprises a device state identification module (4) adapted for identifying an operating state of receiving devices included in the energy network and writing into its memory obtained information about this operating state.

5. The concentrator according to claim 4, **characterized in that** the device state identification module (4) is connected directly to a filter (3) of data relating to operation of receiving devices.
